# EUROPEAN PATENT APPLICATION

(11) **EP 4 523 580 A1**
(43) Date of publication of application: **19.03.2025**
(21) Application number: 24162526.8
(22) Date of filing: 10.03.2024
(51) Int. Cl.: A47J 36/16, A47J 37/06

(54) **A STIRRING AIR FRYER**

(30) Priority: 15.09.2023 CN 202322520004 U; 15.09.2023 CN 202322520973 U
(71) Applicant: Zhejiang Biyi Electric Appliance Co., Ltd., Yuyao, Zhejiang 315400 (CN)
(72) Inventor: MAN, Kaimong, Yuyao 315400 (CN); LOU, Hongxian, Yuyao 315400 (CN); ZANG, Hao, Yuyao 315400 (CN); ZHOU, Zhanhai, Yuyao 315400 (CN)
(74) Representative: ZHAOffice SPRL

(57) **Abstract**

The invention relates to a stirring air fryer to solve some technical issues: seldom use the slide lever to press against each other and the linkage is thus driven, the viewing window structure and the oil spray structure are not reasonably designed. For the key point of this structural design, one end of the said plow stirring paddle is connected by a beveled non-slip sleeve and the holder to one end of the driven lever mounted in the center of the container, the other end of the driven lever is located in the bottom portion of the container, the end of the driven lever in the bottom portion of the container is pressed against the end of the drive lever that extends out of the bottom portion of the container, and both ends slide to link and drive. The bottom portion in the center of the drive lever is connected to the motor shaft of the synchronous motor that extends out of the bottom portion of the container. Preferably a flat key surface is provided on the case liner in the head portion of the container in the semi-transparent viewing top cover, the portion under the flat key surface and the case liner in the head portion above the container are provided with an L-shaped viewing tempered glass aligned to the mouth of the portion under the container, a heat element is disposed in the groove above the container opening on top of the container in the said opening of the body, and an oil spray nozzle is disposed in the edge portion of the groove on one side of the metal centrifugal air blades.

## Description

### Technical Field

The present invention relates to an air fryer or particularly, a stirring air fryer preferably with a single nozzle and three dimensional design.

### Background Art

Air fryer is a new household appliance for food frying by using high-speed air circulation, the food cooked by air fryer can reduce 80% of the oil and fat compared to traditional electric container. Air fryer is also easy to clean and its safety feature and affordable cost are highly favored. Certain air fryers now available in the market are equipped with a stirring structure at the bottom of the container in order to simplify the food stirring and processing in the bottom portion, for example, publication number: 202211374855.1, date of publication: 24 February 2023, title of the utility model: "An air fryer with stirring function" as disclosed in Chinese patent documents; publication number: 202220372409.6, date of publication: 30 August 2022, title of the utility model: "An air fryer with stirring function" as disclosed in Chinese patent documents "An air fryer with automatic lifting and rotating structure". However, the above products and similar products generally leverages the spring lifting to link and drive the upper and lower rotating shafts and the drive shaft, or uses the gear meshing to link and drive. These structures are more complex and demand higher levels of sealing or stability, but seldom use the slide lever to press against each other and the linkage is thus driven. The viewing structures of some other air fryers feature container and side panels that are crafted from transparent materials, for example, publication number: 202222977352.5, date of publication: 7 April 2023, title of the utility model: "A viewing air fryer" as disclosed in Chinese patent documents; and the viewing structures of some air fryers have transparent covers, for example, publication number: 202121911334.6, date of publication: 6 December 2022, title of the utility model: "A viewing air fryer and multifunctional pot" as disclosed in Chinese patent documents; but the viewing structures of the above products and similar products are generally disposed in the container or the case of the handle outside the body, it is seldom to observe the cooking condition in the body from a viewing window on one side of the top portion above the body, or in other words, the state of food ingredients in the body is rarely observed from the front side and above the container, resulting in a very limited field of view.

### SUMMARY OF THE INVENTION

To overcome the above deficiencies, the object of the present invention is to provide a stirring air fryer that solves the technical issues of similar products now available in the market: seldom use the slide lever to press against each other and the linkage is thus driven; inconvenient to produce and use; the viewing structure is not reasonably designed, difficult to observe the food ingredients in the body from the front side and above the container, resulting in a very limited field of view; the oil spraying structure is not reasonably designed. The object is attained by the technical solutions as described below.

A stirring air fryer, wherein the bottom portion of the container of the said air fryer has a plow stirring paddle, one side of the container is molded with the case at the handle as one piece; for the key point of this structural design, one end of the said plow stirring paddle is connected by a beveled non-slip sleeve and the holder to one end of the driven lever mounted in the center of the container, the other end of the driven lever is located in the bottom portion of the container, the end of the driven lever in the bottom portion of the container is pressed against the end of the drive lever that extends out of the bottom portion of the container, and both ends slide to link and drive, wherein the bottom portion in the center of the drive lever is connected to the motor shaft of the synchronous motor that extends out of the bottom portion of the container, and the synchronous motor is connected to the PCB circuit board of the control panel by wiring. The above structure has modified the structural design of the existing similar products that drive the stirring structure in the bottom portion of the container through gear meshing or the gear meshing further realized by the lifting structure; the air fryer indirectly drives the stirring paddle in the bottom portion of the container to rotate and stir by the drive lever and the driven lever that are linked and pressed against each other.

Preferably, the helical outer hex bevel in the outer diameter of the beveled non-slip sleeve is fit to the corresponding outer hex bevel in the hole of the plow stirring paddle, and the outer hex shaft core in the center of the inner diameter of the beveled non-slip sleeve is securely joined to the inner hex shaft hole in the center column of the driven lever by the holder and fixed by screw. The specific connection and structural design of plow stirring paddle, beveled non-slip sleeve, holder, and driven lever is described above.

Preferably, both ends of the said driven lever are symmetrically disposed with the upper pressing tip that is downwardly protruded, the drive lever is the first drive lever or the second drive lever, one end of the first drive lever is disposed with the lower pressing tip that is upwardly protruded, both ends of the second drive lever are symmetrically disposed with the lower pressing tip that is upwardly protruded; the upper pressing tip of the driven lever is pressed against the lower pressing tip of the first drive lever or the second drive lever, and both tips slide to drive and link. The said upper pressing tip and the lower pressing tip are columns respectively. The embodiments of two driven lever structures are described above.

A number of preferred embodiments are described below.

The bottom of the said container has a skewer rack, the thru-hole of the skewer rack center is equipped with a beveled non-slip sleeve and holder that extend out, the motor shaft that extends out of the center of the container is connected by the beveled non-slip sleeve and holder to one end of the plow stirring paddle on the skewer rack, the plow stirring paddle above the thru-hole of the skewer rack and the outer diameter of the plow stirring paddle at the joint of the beveled non-slip sleeve are disposed with the limit ring that is outwardly protruded.

The said plow stirring paddle is equipped with a triangular protrusion or ribbed protrusion that is arc-curved upwardly from one end to the other end of the driven lever, and the triangular tapered stirring tip at the end is larger than the outer diameter of the arc segment, and the bottom portion of the stirring tip is fit to the skewer rack. A specific structural embodiment of the said plow stirring paddle is described above, but other existing stirring blade structure may be an alternative.

The said drive lever is disposed in the center groove of the metal tray in the bottom portion of the container, and one side of the center groove of the metal tray in the bottom portion is disposed with a rail groove linked to the opening of the container. The above structure makes it easier to set the drive lever and locate and place the bottom portion of the container on the bottom metal tray.

The holder liner is provided under the said bottom metal tray, a holder is disposed under the holder liner, the synchronous motor is disposed in the motor groove that is set in the holder under the holder liner, the motor shaft of the synchronous motor is connected to the drive lever by the holder liner and the bottom metal tray in turn, and the center groove and the rail groove of the bottom metal tray correspond to the liner groove of the holder liner. An embodiment of double-layer liner structure in the bottom portion of the opening side of the container is described above, and the holder liner can be omitted.

The semi-transparent viewing top cover is disposed on top of one side of the opening above the container, one side of the semi-transparent viewing top cover is a curved protrusion that is flush with the outer diameter of the container, a flat key surface is provided on the case liner in the head portion of the container in the semi-transparent viewing top cover, the portion under the flat key surface and the case liner in the head portion above the container are provided with an L-shaped viewing tempered glass aligned to the mouth of the portion under the container. As a result, the air fryer cuts out the space on the top side above the container for structural configuration of the viewing window, which makes it easier to observe the state of food ingredients in the container from the front side and from above. The flat key surface on the case liner in the said head portion is molded with the case liner as one piece, or mounted at the case liner as a separate ornament.

The beveled flat surface is provided at the end corners of the semi-transparent viewing top cover above the said viewing tempered glass. As a result, the viewing effect can be further improved by the R angle of the beveled flat surface of the semi-transparent viewing top cover.

The control panel is provided at the chamfered edge of the head portion above one side of the said flat key surface, and the control panel corresponds to the touch button area of the semi-transparent viewing top cover. The above structure reduces the space for configuring the control panel on the front side of the head portion above the opening side of the container, so the control panel is disposed at the chamfered edge of the head portion above the flat key surface side; according to the prior art and similar products, the control panel can also be disposed on top of the head portion, or in the lower portion of the space cutting out the top side of the portion above the container, i.e.: the extended face of the portion above the container at the body opening.

The transparent viewing enclosure is disposed on top of the case outside the container at the opening of the container, the transparent viewing enclosure is molded with the case as one piece, the transparent viewing enclosure aligns to the observation gap on top of the container on one side of the opening in the container; when the container is laid into the opening of the body, the transparent viewing enclosure is flush with the outer diameter of the case and the body; Alternatively, the said transparent viewing enclosure is disposed at the edge of the opening of the body above the container. Consequently, the interior of the container can be further observed through the transparent visual enclosure of the container, or from the transparent viewing enclosure of the body.

The drilled inner window hole is disposed on the container on one side of the opening of the body, the case of the container corresponding to the inner window hole is provided with an outer window hole, the inner and outer window holes are provided with viewing toughed glasses respectively; alternatively, the said container is a viewing borosilicate glass body which omits the inner window hole and the viewing tempered glass. As a result, the interior of the container can be further observed from the viewing tempered glass at the body and case of the container, or from the viewing borosilicate glass container of the body.

The heating element is provided in the groove above the opening on top of the container in the opening of the body, a metal centrifugal air blade is provided in the groove above the heating element, a shaded-pole motor is provided in the head portion of the body, the motor shaft of the shaded-pole motor is connected to the plastic centrifugal air blade in the head portion and the metal centrifugal air blade, the plastic centrifugal air blade is set in the wind hood on the top of the metal heat insulation in the head portion, the heat element and the metal centrifugal air blade are disposed in the groove in the bottom portion of the metal heat insulation, and the shaded-pole motor, heat element are connected to the PCB circuit board of the control panel by wiring. An embodiment of double air blades structure is described above, and the heat element and the shaded-pole motor are connected to the control panel by wiring.

The heat element is disposed in the groove above the container opening on top of the container in the said opening of the body, an oil spray nozzle is disposed in the edge portion of the groove on one side of the metal centrifugal air blades, the piping of the oil spray nozzle is connected to the bottom portion of the oil reservoir on top of the head portion by the oil pump in the head portion, the oil pump is connected to the PCB circuit board of the control panel by wiring, the metal heat insulation groove that is disposed at the groove of the heat element and the metal centrifugal air blades has a heat insulation screen. The above structure further adds an oil spraying structure to one side above the container in the body. The control of oil spraying amount makes it easier to add oil when processing skewers and other food ingredients, so the processed food ingredients would taste better.

The present invention features a reasonable structural design, production, more convenient in production and operation, diverse forms of structures, convenient observation from the viewing window, good field of view, sealing and stability; it is intended to be used as a stirring air fryer and the structural modification of similar products, for instance in a stirring air fryer with a single nozzle and three-dimensional design.

### ACCOMPANYING DRAWINGS

FIG. 1 is a schematic diagram of the exploded structure of the first embodiment of the present invention with Section A of the diagram framed.
FIG. 2 is an enlarged view of Section A of FIG. 1.
FIG. 3 is a schematic diagram of the assembled bottom portion structure of FIG. 1 with the framed portion of the diagram enlarged.
FIG. 4 is a schematic diagram of the exploded structure of the body portion of FIG. 3 in use in which the main case of the body is omitted, and only the internal structure of the open side of the body at the container is enlarged in the framed portion.
FIG. 5 is a schematic diagram of the bottom structure of the explosion state of FIG. 1, in which the container and the handle at the case further explodes to unfold and the framed portion is partially enlarged.
FIG. 6 is a schematic diagram of the container taken out of the second embodiment of FIG.4 in use, in which the drive lever is modified and the framing portion is enlarged.

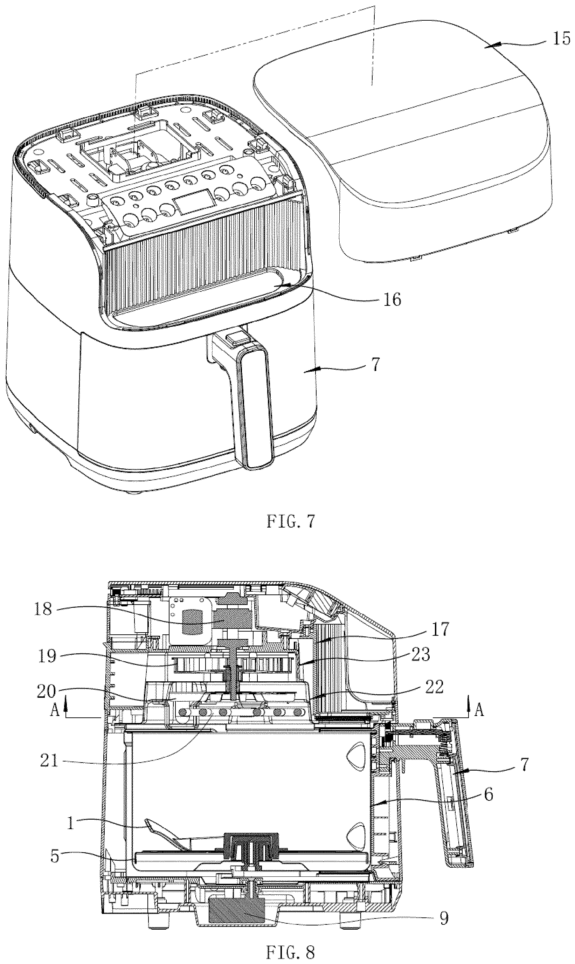

FIG. 7 is a schematic diagram of the three-dimensional structure of the second embodiment of FIG. 6, in which the semi-transparent viewing top cover is opened.
FIG. 8 is a schematic diagram of the sectional structure after assembly of FIG. 7, in which an A-A sectional view is made.

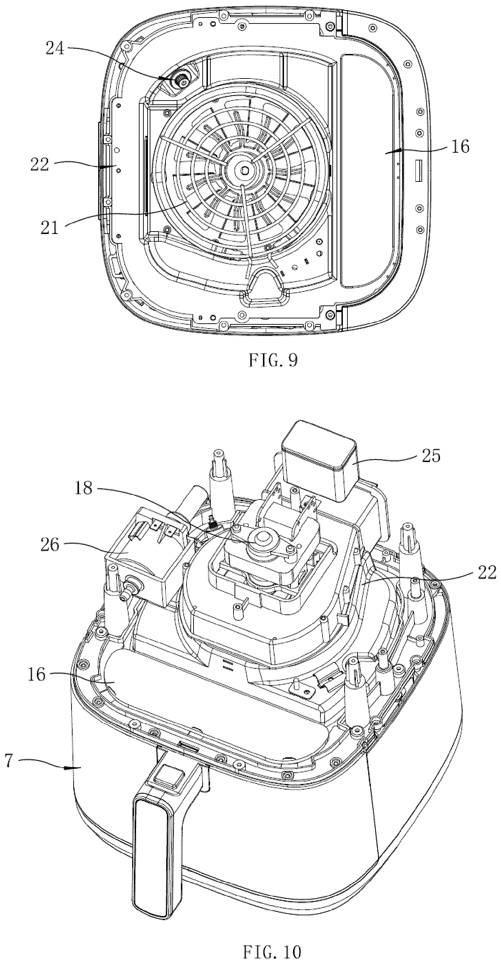

FIG. 9 is a schematic diagram of the A-A sectional view structure of FIG. 8.
FIG. 10 is a schematic diagram of the internal structure of the head portion of FIG. 7.
FIG. 11 is a schematic diagram of the modified sectional view structure of FIG. 8.

Serial numbers and names of the accompanying drawings: 1. Plow stirring paddle, 101. Limit ring, 2. Beveled non-slip sleeve. 3. Holder, 4. Driven lever, 5. Skewer rack, 6. Container, 7. Frying basket handle assembly, 8. Holder, 9. Synchronous motor, 10. Holder liner, 11. Bottom metal tray, 12. First drive lever, 13. Metal side panel, 14. Second drive lever, 15. Semi-transparent viewing top cover, 16. Viewing tempered glass, 17. Flat key surface, 18. Shaded-pole motor, 19. Plastic centrifugal air blades, 20. Metal centrifugal air blades, 21. Heat element, 22. Metal heat insulation, 23. Wind guard, 24. Oil spray nozzle, 25. Oil reservoir, 26. Oil pump, 27. Transparent viewing enclosure.

### EMBODIMENTS

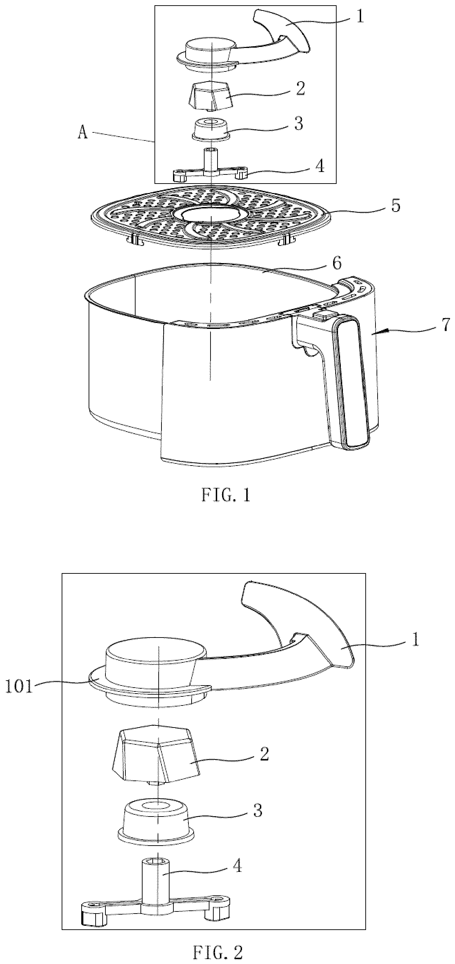

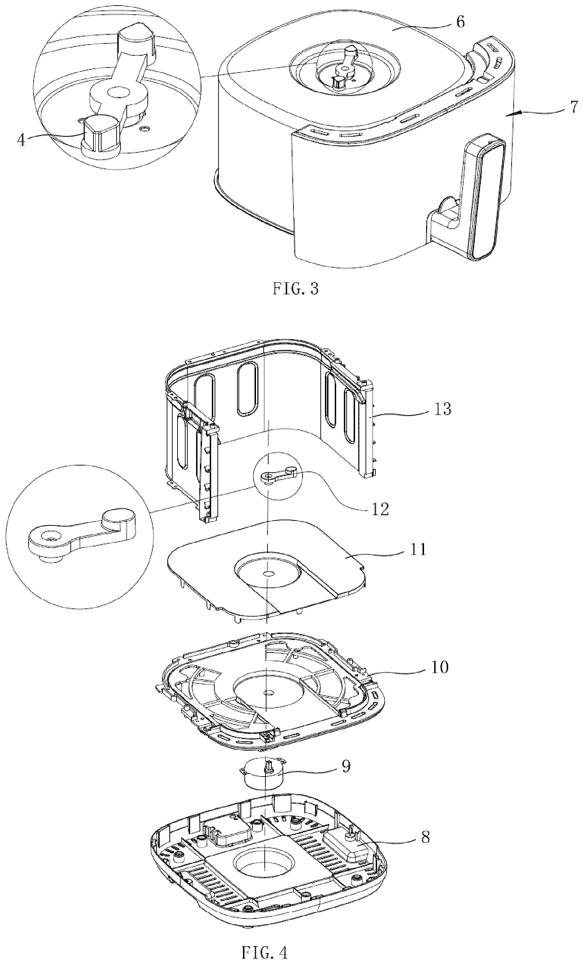

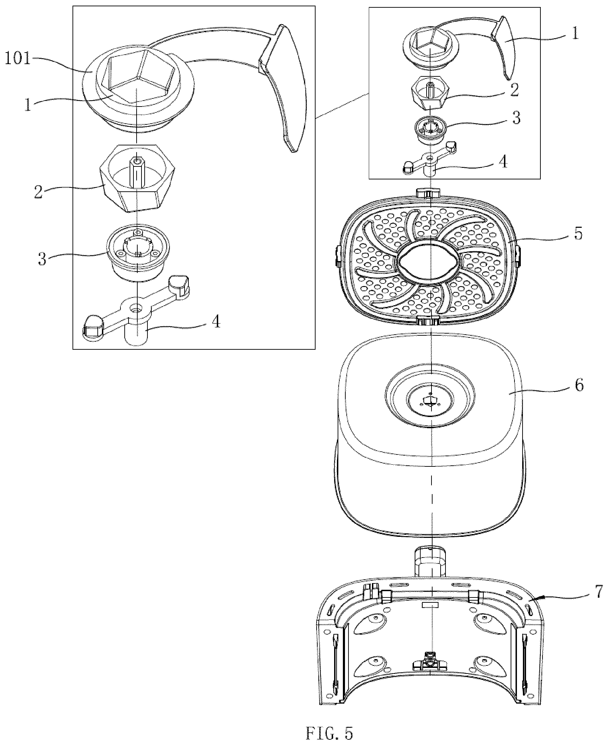

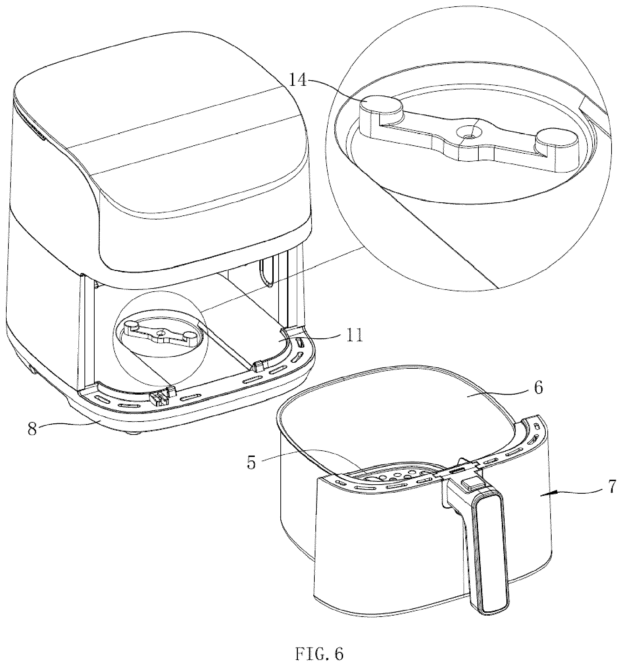

The structure and use of the present invention is further described with reference to the accompanying drawings. As referred to in FIGS. 1- 6, the bottom portion of the container 6 of the said air fryer has a plow stirring paddle 1, one side of the container is molded with the case at the handle as one piece; for the key point of this structural design, one end of the said plow stirring paddle is connected by a beveled non-slip sleeve 2 and the holder 3 to one end of the driven lever 4 mounted in the center of the container, the other end of the driven lever is located in the bottom portion of the container, the end of the driven lever in the bottom portion of the container is pressed against the end of the drive lever that extends out of the bottom portion of the container, and both ends slide to link and drive. The bottom portion in the center of the drive lever is connected to the motor shaft of the synchronous motor 9 that extends out of the bottom portion of the container, and the synchronous motor is connected to the PCB circuit board of the control panel by wiring.

The specific structure is described below: the helical outer hex bevel in the outer diameter of the beveled non-slip sleeve is fit to the corresponding outer hex bevel in the hole of the plow stirring paddle, and the outer hex shaft core in the center of the inner diameter of the beveled non-slip sleeve is securely joined to the inner hex shaft hole in the center column of the driven lever by the holder and fixed by screw. Both ends of the said driven lever are symmetrically disposed with the upper pressing tip that is downwardly protruded, the drive lever is the first drive lever 12 or the second drive lever 14, one end of the first drive lever is disposed with the lower pressing tip that is upwardly protruded, both ends of the second drive lever are symmetrically disposed with the lower pressing tip that is upwardly protruded; the upper pressing tip of the driven lever is pressed against the lower pressing tip of the first drive lever or the second drive lever, and both tips slide to drive and link. The said upper pressing tip and the lower pressing tip are columns respectively.

The bottom of the said container has a skewer rack 5, the thru-hole of the skewer rack center is equipped with a beveled non-slip sleeve and holder that extend out, the motor shaft that extends out of the center of the container is connected by the beveled non-slip sleeve and holder to one end of the plow stirring paddle on the skewer rack, the plow stirring paddle above the thru-hole of the skewer rack and the outer diameter of the plow stirring paddle at the joint of the beveled non-slip sleeve are disposed with the limit ring 101 that is outwardly protruded. The plow stirring paddle is equipped with a triangular protrusion or ribbed protrusion that is arc-curved upwardly from one end to the other end of the driven lever, and the triangular tapered stirring tip at the end is larger than the outer diameter of the arc segment, and the bottom portion of the stirring tip is fit to the skewer rack. The drive lever is disposed in the center groove of the metal tray 11 in the bottom portion of the container, and one side of the center groove of the metal tray in the bottom portion is disposed with a rail groove linked to the opening of the container. A holder liner 10 is provided under the said bottom metal tray, a holder 8 is disposed under the holder liner, the synchronous motor is disposed in the motor groove that is set in the holder under the holder liner, the motor shaft of the synchronous motor is connected to the drive lever by the holder liner and the bottom metal tray in turn, and the center groove and the rail groove of the bottom metal tray correspond to the liner groove of the holder liner.

To operate the air fryer, place the container to the body, press and select the stirring function of the control panel, then the synchronous motor can be started, and the plow stirring paddle is driven by the drive lever and the driven lever to rotate. A specific embodiment of the stirring structure of the said air fryer is described as follows: the center hole of the drive lever is mounted on the motor shaft of the synchronous motor and as the synchronous motor rotates, the columns on both ends of the drive lever push the columns on both ends of the driven lever, thus pushing the plow stirring paddle to rotate. The center column of the said driven lever passes through the holder fixed at the bottom of the container, joined by screws to the beveled non-slip sleeve fit on the holder, and the plow stirring paddle is fit to the beveled non-slip sleeve, making food stirring possible. The stirring structure of the air fryer enables unrestrained pushing and drawing of the container when food ingredients turn over, an easy and simple way for operation.

The semi-transparent viewing top cover is disposed on top of one side of the opening above the container, one side of the semi-transparent viewing top cover is a curved protrusion that is flush with the outer diameter of the container, a flat key surface 17 is provided on the case liner in the head portion of the container in the semi-transparent viewing top cover, the portion under the flat key surface and the case liner in the head portion above the container are provided with an L-shaped viewing tempered glass 16 aligned to the mouth of the portion under the container. A beveled flat surface is provided at the end corners of the semi-transparent viewing top cover above the said viewing tempered glass, a control panel is provided at the chamfered edge of the head portion above one side of the said flat key surface, and the control panel corresponds to the touch button area of the semi-transparent viewing top cover. A drilled inner window hole is disposed on the container on one side of the opening of the body, the case of the container corresponding to the inner window hole is provided with an outer window hole, the inner and outer window holes are provided with viewing toughed glasses respectively; alternatively, the said container is a viewing borosilicate glass body which omits the inner window hole and the viewing tempered glass. A heating element 21 is provided in the groove above the opening on top of the container in the opening of the body, a metal centrifugal air blade 20 is provided in the groove above the heating element, a shaded-pole motor 18 is provided in the head portion of the body, the motor shaft of the shaded-pole motor is connected to the plastic centrifugal air blade 19 in the head portion and the metal centrifugal air blade, the plastic centrifugal air blade is set in the wind hood 23 on the top of the metal heat insulation 22 in the head portion, the heat element and the metal centrifugal air blade are disposed in the groove in the bottom portion of the metal heat insulation, and the shaded-pole motor, heat element are connected to the PCB circuit board of the control panel by wiring. An oil spray nozzle 24 is disposed in the edge portion of the groove on one side of the metal centrifugal air blades, the piping of the oil spray nozzle is connected to the bottom portion of the oil reservoir 25 on top of the head portion by the oil pump 26 in the head portion, the oil pump is connected to the PCB circuit board of the control panel by wiring, the metal heat insulation groove that is disposed at the groove of the heat element and the metal centrifugal air blades has a heat insulation screen.

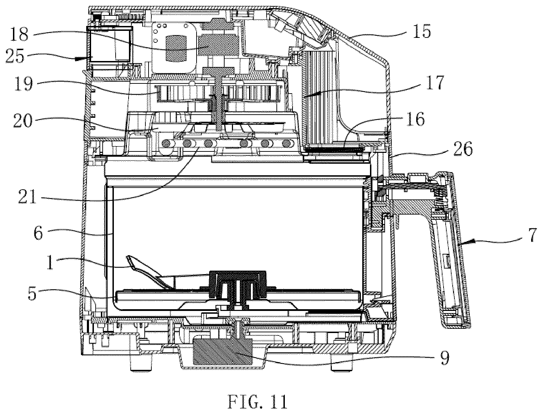

According to the characteristics of the above structure and as referred to in FIG.11, a transparent viewing enclosure 27 is disposed on top of the case outside the container at the opening of the container, the transparent viewing enclosure is molded with the case as one piece, the transparent viewing enclosure aligns to the observation gap on top of the container on one side of the opening in the container; when the container is laid into the opening of the body, the transparent viewing enclosure is flush with the outer diameter of the case and the body; Alternatively, the said transparent viewing enclosure is disposed at the edge of the opening of the body above the container.

Before use, the container is laid to the body, the state of food ingredients in the container can be readily observed from the viewing tempered glass in the semi-transparent viewing top cover, or from the said transparent viewing enclosure and the viewing structure on the body of the container.

In summary, most of the existing air fryers support observation of the state of food ingredients in the container in straight up down from the top, or viewing from the frying basket window, but scarcely from the front side and above the container. The viewing structure of this air fryer is ergonomically suited and user is given the broadest viewing angle.

## Claims

1. A stirring air fryer, wherein the bottom portion of a container (6) of the said air fryer has a plow stirring paddle (1); one end of the said plow stirring paddle (1) is connected by a beveled non-slip sleeve (2) and a holder (3) to one end of the driven lever (4) mounted in the center of the container (6), the other end of the driven lever (4) is located in the bottom portion of the container (6), the end of the driven lever in the bottom portion of the container is pressed against the end of a drive lever that extends out of the bottom portion of the container, and both ends slide to link and drive, wherein the bottom portion in the center of the drive lever is connected to the motor shaft of a synchronous motor (9) that extends out of the bottom portion of the container, and the synchronous motor is connected to a PCB circuit board of the control panel by wiring.

2. A stirring air fryer as described in Claim 1, wherein a helical outer hex bevel in the outer diameter of the beveled non-slip sleeve (2) is fit to a corresponding outer hex bevel in the hole of the plow stirring paddle (1), and an outer hex shaft core in the center of the inner diameter of the beveled non-slip sleeve (2) is securely joined to an inner hex shaft hole in the center column of the driven lever (4) by the holder (3) and preferably fixed by a screw.

3. A stirring air fryer as described in Claim 1 or 2, wherein both ends of the said driven lever (4) are symmetrically disposed with the upper pressing tip that is downwardly protruded, the drive lever is a first drive lever (12) or a second drive lever (14), one end of the first drive lever is disposed with the lower pressing tip that is upwardly protruded, both ends of the second drive lever are symmetrically disposed with the lower pressing tip that is upwardly protruded; the upper pressing tip of the driven lever is pressed against the lower pressing tip of the first drive lever or the second drive lever, and both tips slide to drive and link, wherein the said upper pressing tip and the lower pressing tip are columns respectively.

4. A stirring air fryer as described in Claim 1, 2 or 3, wherein the bottom of the said container (6) has a skewer rack (5), the thru-hole of the skewer rack center is equipped with the beveled non-slip sleeve (2) and holder (3) that extend out, the motor shaft that extends out of the center of the container is connected by the beveled non-slip sleeve and holder to one end of the plow stirring paddle (1) on the skewer rack, the plow stirring paddle above the thru-hole of the skewer rack and the outer diameter of the plow stirring paddle at the joint of the beveled non-slip sleeve are disposed with the limit ring (101) that is outwardly protruded.

5. A stirring air fryer as described in Claim 4, wherein the said plow stirring paddle (1) is equipped with a triangular protrusion or ribbed protrusion that is arc-curved upwardly from one end to the other end of the driven lever (4), and the triangular tapered stirring tip at the end is larger than the outer diameter of the arc segment, and the bottom portion of the stirring tip is fit to the skewer rack (5).

6. A stirring air fryer as described in any of the preceding Claims, wherein the said drive lever is disposed in a center groove of a metal tray (11) in the bottom portion of the container, and one side of the center groove of the metal tray in the bottom portion is disposed with a rail groove linked to the opening of the container.

7. A stirring air fryer as described in any of the preceding Claims, wherein a holder liner (10) is provided under the said bottom metal tray (11), a holder (8) is disposed under the holder liner, the synchronous motor (9) is disposed in a motor groove that is set in the holder under the holder liner, the motor shaft of the synchronous motor is connected to the drive lever by the holder liner and the bottom metal tray in turn, and the center groove and the rail groove of the bottom metal tray correspond to the liner groove of the holder liner.

8. A stirring air fryer as described in any of the preceding Claims, wherein a semi-transparent viewing top cover (15) is disposed on top of one side of the opening above the container (6), one side of the semi-transparent viewing top cover is a curved protrusion that is flush with the outer diameter of the container, a flat key surface (17) is provided on the case liner in the head portion of the container in the semi-transparent viewing top cover, the portion under the flat key surface and the case liner in the head portion above the container are provided with an L-shaped viewing tempered glass (16) aligned to the mouth of the portion under the container.

9. A stirring air fryer as described in Claim 8, wherein a beveled flat surface is provided at the end corners of the semi-transparent viewing top cover (15) above the said viewing tempered glass (16).

10. A stirring air fryer as described in Claim 8 or 9, wherein a control panel is provided at the chamfered edge of the head portion above one side of the said flat key surface (17), and the control panel corresponds to the touch button area of the semi-transparent viewing top cover (15).

11. A stirring air fryer as described in Claim 8, 9 or 10, a transparent viewing enclosure (27) is disposed on top of the case outside the container at the opening of the container (6), the transparent viewing enclosure is molded with the case as one piece, the transparent viewing enclosure aligns to the observation gap on top of the container on one side of the opening in the container; when the container is laid into the opening of the body, the transparent viewing enclosure is flush with the outer diameter of the case and the body; the said transparent viewing enclosure is disposed at the edge of the opening of the body above the container.

12. A stirring air fryer described in any of the Claims 8 to 11, wherein a drilled inner window hole is disposed on the container (6) on one side of the opening of the body, the case of the container corresponding to the inner window hole is provided with an outer window hole, the inner and outer window holes are provided with viewing tempered glasses (16) respectively; alternatively, the said container is a viewing borosilicate glass body which omits the inner window hole and the viewing tempered glass.

13. A stirring air fryer as described in any of the preceding Claims, wherein a heating element (21) is provided in the groove above the opening on top of the container (6) in the opening of the body, a metal centrifugal air blade (20) is provided in the groove above the heating element, a shaded-pole motor (18) is provided in the head portion of the body, the motor shaft of the shaded-pole motor is connected to the plastic centrifugal air blade (19) in the head portion and the metal centrifugal air blade, the plastic centrifugal air blade is set in the wind hood (23) on the top of the metal heat insulation (22) in the head portion, the heat element and the metal centrifugal air blade are disposed in the groove in the bottom portion of the metal heat insulation, and the shaded-pole motor, heat element are connected to the PCB circuit board of the control panel by wiring.

14. A stirring air fryer as described in any of the preceding Claims, wherein a heat element (21) is disposed in the groove above the container (6) opening on top of the container in the said opening of the body, an oil spray nozzle (24) is disposed in the edge portion of the groove on one side of the metal centrifugal air blades (20), the piping of the oil spray nozzle is connected to the bottom portion of the oil reservoir (25) on top of the head portion by the oil pump (26) in the head portion, the oil pump is connected to the PCB circuit board of the control panel by wiring, the metal heat insulation groove that is disposed at the groove of the heat element and the metal centrifugal air blades has a heat insulation screen.
